(19) Europäisches Patentamt
European Patent Office
Office européen des brevets

(11) **EP 4 492 673 A1**

(12) **EUROPEAN PATENT APPLICATION**
published in accordance with Art. 153(4) EPC

(43) Date of publication:
**15.01.2025 Bulletin 2025/03**

(21) Application number: 23766303.4

(22) Date of filing: **13.01.2023**

(51) International Patent Classification (IPC):
*H02P 29/00* (2016.01)   *G05B 11/36* (2006.01)
*H02P 21/16* (2016.01)

(52) Cooperative Patent Classification (CPC):
**G05B 11/36; H02P 21/16; H02P 29/00**

(86) International application number:
**PCT/JP2023/000709**

(87) International publication number:
**WO 2023/171122 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022  JP 2022038706**

(71) Applicant: **Hitachi Industrial Equipment Systems
Co., Ltd.
Tokyo 101-0021 (JP)**

(72) Inventors:
• **MATSUBARA, Mitsuru
Tokyo 100-8280 (JP)**

• **TAKANO, Yuuri
Tokyo 101-0021 (JP)**
• **UEI, Yusuke
Tokyo 101-0021 (JP)**
• **KONDO, Terutomo
Tokyo 101-0021 (JP)**
• **YANADA, Tetsuo
Tokyo 101-0021 (JP)**
• **TOBARI, Kazuaki
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **MOTOR CONTROL DEVICE, AND AUTOMATIC ADJUSTMENT METHOD FOR SAME**

(57)   A motor control device that controls a machine comprising an identification part estimating moment of inertia and viscous friction, a speed command generation part generating a speed command obtained by integrating an acceleration command, a difference signal calculation part calculating a difference signal from the acceleration command with time difference, and an identification interval judgment part determining a valid interval for operate the identification part based on the difference signal, and operating the identification part in the valid interval and driving the motor based on the speed command generated by the speed command generating part, wherein the identification part estimates the moment of inertia and the viscous friction.

Fig. 1

EP 4 492 673 A1

**Description**

TECHNICAL FIELD

This invention relates to a control device for a motor and its automatic adjustment method.

BACKGROUND ART

To assemble a motor and motor control device into an industrial machine and make it operate as desired, it is necessary to adjust the motor control device appropriately according to the characteristics of the industrial machine in which the motor is assembled. A technology that automatically performs this adjustment is useful for industry because it can reduce the human and time costs associated with the adjustment.

Regarding automatic adjustment technologies for motor control devices, a method of automatically adjusting a motor control device based on the characteristics of an industrial machine after automatically ascertaining them has been proposed in the past. The characteristics of an industrial machine in this case are, for example, the moment of inertia of the motor shaft, viscous friction, coulomb friction, static friction, resonance characteristics, and other physical characteristics related to the control performance of the industrial machine in which the motor is installed.

For example, patent document 1 provides a method for on-line estimation of the moment of inertia and viscous friction coefficient, taking coulomb friction into account, even when the motor rotation angular velocity is low. In the patent document 1, coulomb friction is regarded as a constant value disturbance, and differential processing is applied to the observed values of motor torque and rotation angular velocity to remove the effect of the constant value disturbance before estimating the moment of inertia and viscous friction coefficient.

CITATION LIST

PATENT DOCUMENT

Patent Document 1 Japanese patent publication No. 2006-217729

SUMMARY OF THE INVENTION

PROBLEMS TO BE SOLVED BY THE INVENTION

The patent document 1 uses differential processing, but differential processing emphasizes high-frequency noise superimposed on the observed values of motor torque and motor rotation angular velocity, and even if a low-pass filter is applied to remove the high-frequency noise, it is not necessarily advantageous for the purpose of highly accurate estimation of the moment of inertia and viscous friction coefficient (hereinafter referred to as the mechanical system parameters). In particular, this process is not desirable, especially when the motor rotation angular velocity is low and noise has a strong influence.

Although the patent document 1 can handle the case of low motor rotation angular velocity, if the motor torque and motor torque change are not large enough, the observed value of motor torque will be relatively affected by noise, which may worsen the estimation accuracy of the mechanical system parameters.

If the motor torque and motor torque change are sufficiently large to ensure estimation accuracy, mechanical vibrations of several to several tens of hertz are excited by the motor torque change when the rigidity of industrial machine is low, and these are superimposed on the observed motor torque values as low-frequency motor torque disturbance, which is a 'factor that deteriorates the estimation accuracy of mechanical system parameters.

In other words, in industrial machines with low rigidity, where mechanical vibration of several to several tens of hertz is superimposed on the observed motor torque values, the trade-off relationship is that when motor torque and motor torque changes are small, the estimation accuracy is affected by noise, and when motor torque and motor torque changes are large, the estimation accuracy is affected by mechanical vibration, resulting in lower estimation accuracy.

The purpose of this invention is to estimate the moment of inertia and viscous friction with high accuracy even when the rigidity of the machine is low.

A preferred example of the invention is a motor control device that controls a machine comprising an identification part estimating a moment of inertia and viscous friction, a speed command generation part generating a speed command obtained by integrating an acceleration command, a difference signal calculation part calculating a difference signal from the acceleration command with time difference, and an identification interval judgment part determining a valid interval for operate the identification part based on the difference signal, and operating the identification part in the valid interval, and driving the motor based on the speed command generated by the speed command generating part, wherein the

identification part estimates the moment of inertia and the viscous friction.

EFFECTS OF THE INVENTION

According to the present invention, the moment of inertia and viscous friction can be accurately estimated even when the rigidity of the machine is low.

BRIEF DESCRIPTION OF THE DRAWINGS

Fig. 1: The figure shows Example 1.
Fig. 2: The figure shows the configuration of a variant of Example 1 that includes an auto-regulator.
Fig. 3: The figure explaining the identification part.
Fig. 4: The figure of a linear difference filter.
Fig. 5: The figure shows frequency response of linear difference filters and differentiator.
Fig. 6: The figure shows relationship between the acceleration command and time in the acceleration command generator.
Fig. 7: The figure shows a numerical example of the calculation of a speed command from the acceleration command in Fig. 6.
Fig. 8: The figure shows frequency characteristics of speed command.
Fig. 9: The figure explaining the identification interval judge.
Fig. 10: The figure shows the difference signal and its absolute value signal based on the acceleration command in Fig.7.
Fig. 11: The figure shows Example 2.
Fig. 12: The figure shows the processing steps of the automatic adjustment process in example 3.
Fig. 13: The figure shows the speed control system of the AC servo motor covered by example 3.
Fig. 14: The figure shows the processing steps of the automatic adjustment process when the motor control device constitutes the position control system.
Fig. 15: The figure shows an ejector that removes machine parts from a machine tool.

MODE FOR CARRYING OUT THE INVENTION

The following is a description of an example of the application of the present invention with reference to the drawings. In each figure, components having a common function are given the same number, and their description is omitted.

[Example 1]

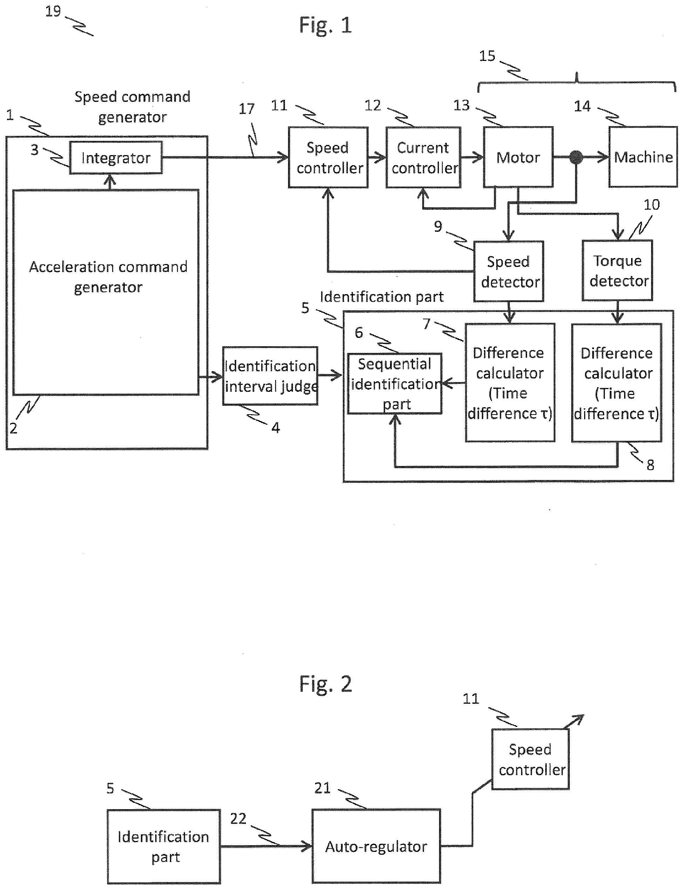

Fig 1 shows the first basic configuration of Example 1. The motor control device 19 in this example has a configuration other than the machine 15 assembled with the motor, which consists of the motor 13 and the machine 14 in Fig. 1.

The motor control device 19 has a current controller 12 and a speed controller 11 that control the motor 13 assembled with the machine 14, a speed command generator 1 that provides the speed command to the speed controller 11, identification part 5 that estimates the moment of inertia and viscous friction coefficient, which are mechanical characteristics of the machine 15 assembled with the motor 13, based on the observed values of the motor torque and the motor rotation angular velocity provided by the torque detector 10 and the speed detector 9, respectively, and identification interval judge 4 that operates the identification part 5 based on the acceleration command provided by the acceleration command generator 2 included in the speed command generator 1.

The motor control device 19 speed detector 9 and torque detector 10 are composed of hardware.

Speed command generator 1, identification interval judge 4, identification part 5, speed controller 11 and current controller 12 are composed of software in which a processor reads a program stored in a memory or other storage device and executes each function.

The speed command generator 1 consists of the acceleration command generator 2 and the integrator 3.

The speed command generator 1 generates the speed command 17 by the integrator 3 performing an integration process on the acceleration command generated by the acceleration command generator 2.

The speed detector 9 detects the angular speed of rotation of the motor shaft of motor 13 and outputs it as an observed value of the angular speed of motor rotation, and based on the speed command 17 and the observed value of the angular speed of motor rotation, the speed controller 11 calculates the command value of the motor torque (motor torque command) is calculated.

The speed detector 9 calculates the observed value of the motor rotation angular speed from the rotational position of the motor shaft provided by the encoder attached to the motor 13, for example.

The current controller 12 provides voltage commands to the motor 13 so that the motor torque delivered by the motor 13 to the machine 14 follows the motor torque command.

The torque detector 10 detects the motor torque supplied by the motor 13 and calculates the observed value of the motor torque. The torque detector 10, for example, detects the current of the motor 13 with a current sensor and calculates the motor torque by multiplying it by a torque multiplier.

The identification part 5 consists of a sequential identification part 6, a difference calculator 7, and a difference calculator 8.

The sequential identification part 6 estimates the moment of inertia and viscous friction coefficient cyclically and sequentially based on the outputs of difference calculator 7 and difference calculator 8.

The timing for performing the identification depends on the instructions from the identification interval judge 4. The identification part 5 identifies a model of the mechanical characteristics of the machine 15 in which the motor 13 is assembled, and estimates the mechanical system parameters based on the identified model.

Although not shown in Fig. 1, an auto-regulator may be included that the motor control device 19 automatically adjusts the control gain of the speed controller and/or position controller based on the moment of inertia and viscous friction coefficient estimated by the sequential identification part 6.

Fig. 2 shows the configuration of a variant of Example 1 that includes an auto-regulator. Based on the moment of inertia and viscous friction coefficient information 22 calculated by the identification part 5, the auto-regulator 21 calculates an appropriate control gain of the speed controller 11 for the machine 15 on which the motor 13 is assembled, and sets the control gain in the speed controller 11.

Suppose that speed controller 11 is, for example, a PI (Proportional-Integral) controller and the desired responsiveness is set by the user.

In such a case, auto-regulator 21 calculates the P-gain and I-gain that achieve the desired responsiveness based on the moment of inertia and viscous friction coefficient, and sets the result to speed controller 11. This makes it possible to provide a motor control device 19 that can automatically adjust the speed controller 11.

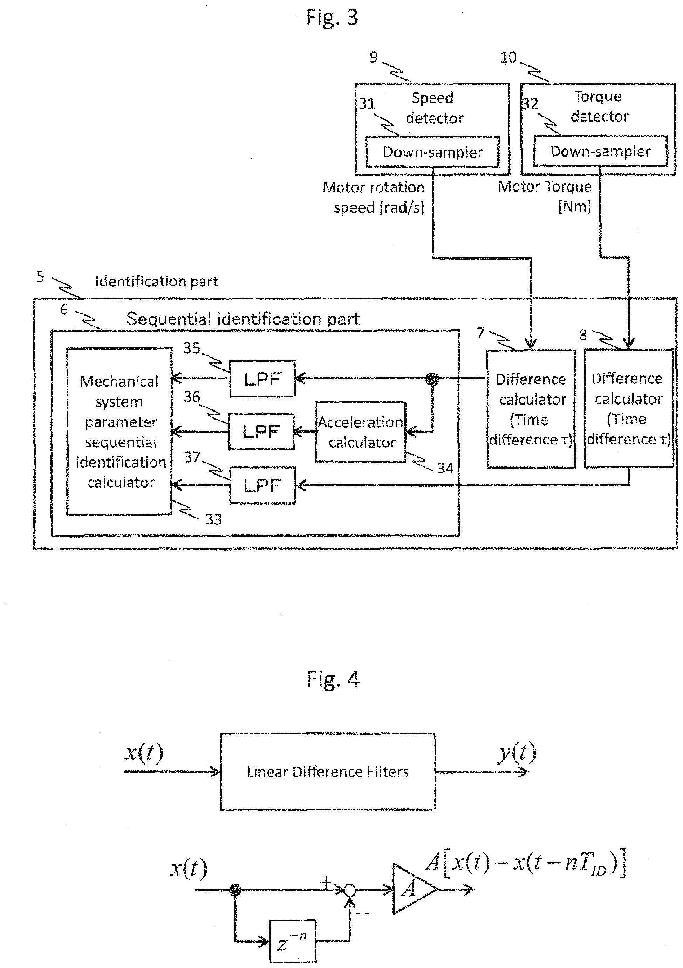

The configuration and operation of the identification part 5 are described in detail based on Fig. 3. The sequential identification part 6 consists of a mechanical system parameter sequential identification calculator 33, low-pass filters (hereinafter referred to as LPF) 35 to 37, and an acceleration calculator 34.

The speed detector 9 and torque detector 10 each include a down sampler 31 and a down sampler 32. The speed detector 9 calculates the observed value of the motor rotational angular velocity for identification via the down sampler 31.

The torque detector 10 calculates the observed value of the motor torque for identification via the down sampler 32.

If the identification period of the identification part 5 is TID and the control period of the speed controller 11 is TSP, TID > TSP is acceptable, given the background that high speed control response is desired in recent years. Therefore, down-sampler 31 and down-sampler 32 are responsible for adjusting and resampling the period of the signal so that the observed values of the motor rotation angular velocity and the motor torque are in the period of the identification period TID, respectively.

If TSP is tens of microseconds, TID may be TID > 10 $\times$ TSP, and the identification period TID shall be set sufficiently long compared to TSP.

The down-sampler 31 and down-sampler 32 may employ, for example, a decimation filter.

When the machine 14 is operating at nonzero speed, coulomb friction generally affects the observed values of motor torque and the observed values of motor rotational angular velocity as a constant value torque disturbance. Coulomb friction is one of the dynamic frictions and refers to a constant value frictional force that acts to prevent the machine from moving out of the static friction region and independent of the speed at which the machine is moving during operation.

The identification part 5 employs a difference calculator 7 and a difference calculator 8 to eliminate this effect. This is because the difference in motor torque, etc., in the difference calculator, which considers time differences, eliminates the effect of coulomb friction, which is a constant value friction force.

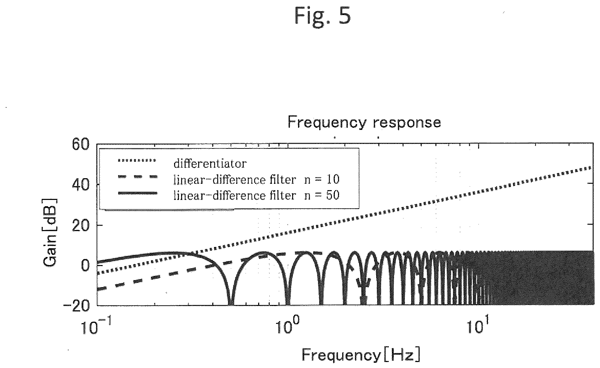

The difference calculator 7 and difference calculator 8 are explained using Fig. 4 and Fig. 5. Fig. 4 illustrates the linear difference filter. Fig. 5 shows the frequency responses of the linear difference filter and the differentiator. The difference calculator 7 and difference calculator 8 are the linear difference filters shown in Fig. 4 and the following formula (1).

[Number 1]

$$y(t) = A\big[x(t) - x(t - n \cdot T_{ID})\big] \quad (1)$$

where, x, y, A, and n are the input, output, filter gain of the linear difference filter and positive integers respectively and time difference $\tau$ (= n $\times$ TID) > 0.

The $Z^{-n}$ in Fig. 4 is the delay operator in the discrete system. Here we compute the input x with time difference $\tau$ delayed.

Fig. 5 shows the frequency response (gain) of the linear-difference filter at A = 1, together with the frequency response of the differentiator. The dotted, dashed, and solid lines are the frequency response (gain) of the differentiator, the linear-difference filter with n = 10, and the linear-difference filter with n = 50, respectively.

As can be seen in Fig. 5, even if a differentiator can remove the effect of coulomb friction, but its characteristic of significantly increasing gain at high frequency range emphasizes various noises superimposed on the observed values of motor torque and angular velocity of motor rotation, which leads to a decrease in signal-to-noise ratio (SN ratio) as signals used for identification and it is not undesirable.

On the other hand, the linear difference filter has a maximum gain of 2 times in the high-frequency range for A=1, and the larger n (or n x TID) is, the more low-frequency components are included in the signal output. Therefore, the effect of coulomb friction can be removed while suppressing the decrease in the SN ratio of the signal used for identification.

Generating significant motor torque generally improves the SN ratio of the signal used for identification, but even when the motor torque is not significant, the linear-difference filter has an advantage over differential processing in that it can remove the effects of coulomb friction without causing a significant decrease in SN ratio.

On the other hand, the linear difference filter has the disadvantage that it must always keep past values of the input signal x by the time difference $\tau$. When the operation is performed on a digital arithmetic device such as a microcomputer, the memory capacity for storing past signals increases as the positive integer n for the time difference $\tau$ increases, and arithmetic resources are required for memory management.

This disadvantage is mitigated by the down-sampler 31 and down-sampler 32 in this example. That is, the down-sampler 31 and down-sampler 32 with a sufficiently large TID can increase the time difference $\tau$ without making the positive number n extremely large. As a result, the effect of coulomb friction can be eliminated without a significant decrease in SN ratio while avoiding an increase in memory capacity and memory management computing resources.

Another disadvantage of the linear-difference filter is that it has a significant response delay. Since the influence of the initial state of the linear difference filter remains on the output of the linear difference filter from the time difference $\tau$ after receiving the first input until the time difference $\tau$ elapses, an accurate difference signal for the input signal is output after the time difference $\tau$. Therefore, it is desirable for identification part 5 to perform identification using the accurate difference signal.

This disadvantage is resolved in this example by the identification interval judge 4. The reason is that identification interval judge 4 does not operate sequential identification part 6 in the identification part 5 as long as the effect of the initial state of the linear difference filter remains, as described in detail below.

Sequential identification part 6 in Fig. 3 operates in the identification cycle TID. It operates only during the time interval indicated by the identification interval judge 4.

The output of difference calculator 7 is s(t) and the output of difference calculator 8 is T(t). At this time, sequential identification part 6 receives s(t) and T(t), and acceleration calculator 34 differentiates s(t) to output a(t). The differentiation process in the digital arithmetic unit is realized by incomplete differentiation, etc.

s(t), a(t), and T(t) are processed by LPF35, LPF36, and LPF37, respectively, and the results are input to the mechanical system parameter sequential identification calculator 33.

The mechanical system parameter sequential identification calculator 33 is specifically calculated by sequential processing (identification cycle TID) according to the following formulas (2) to (6). For simplification of symbols, the signals after being processed by LPF 35 to 37 are denoted as s(t), a(t), and T(t), respectively.

[Number 2]

$$\theta(k+1) = \theta(k) + K(k)e(k) \quad (2)$$

[Number 3]

$$e(k) = T(k) - d^{T}(k)\theta(k) \quad (3)$$

[Number 4]

$$K(k) = \frac{1}{\lambda + d^T(k)P(k)d(k)} P(k)d(k) \qquad (4)$$

[number 5]

$$P(k+1) = \frac{1}{\lambda}\left(P(k) - K(k)d^T(k)P(k)\right) \qquad (5)$$

[number 6]

$$\theta(k) \equiv \begin{bmatrix} J(k) \\ D(k) \end{bmatrix}, \quad d(k) \equiv \begin{bmatrix} a(k) \\ s(k) \end{bmatrix}, \quad P(0) \equiv \begin{bmatrix} p_{00} & 0 \\ 0 & p_{01} \end{bmatrix} \qquad (6)$$

J(k) and D(k) are the kth step estimates of the moment of inertia and viscous friction coefficient, and θ(k) is the vector of these estimates. Here, kth step refers to the kth calculation step performed by the mechanical system parameter sequential identification calculator 33. P(0) is the initial value of the sequential identification, and $\lambda$ is a forgetting coefficient set at $0 < \lambda \le 1$. The $\lambda$ is a parameter that determines the degree to which the effect of past signals is reflected in the identification at the current time, and the closer it is to 1, the more the effect of past signals is reflected.

LPFs 35-37 are provided to remove noise superimposed on s(t), a(t) and T(t). For example, a LPF with a first-order delay system may be employed, as shown in the following formula (7).

[number 7]

$$LPF(s) = \frac{\omega}{s + \omega} \qquad (7)$$

where, s and ω are the Laplace operator and the cutoff frequency [rad/s] of the LPF, respectively.

The influence of noise can be further reduced by using a multi-stage LPF for the first-order delay system or by setting a lower cutoff frequency ω. The filter characteristics of LPFs 35 to 37 should be the same so that the phase of each signal used for identification is aligned. For convenience, formula (7) is expressed as a continuous-time system, but it is discretized and implemented in a digital arithmetic unit.

If the rigidity of the machine 15 in which the motor 13 is assembled is low, operations with noticeable motor torque and motor torque change excite vibration in the machine, and the effect of the vibration is superimposed on the observed motor torque as a torque disturbance.

The vibration of the machine caused by low rigidity is generally several Hz to several tens of Hz, and therefore the torque disturbance caused by this vibration is also several Hz to several tens of Hz.

To be advantageous for identification, when the motor torque and motor torque change are made remarkable from the viewpoint of improving the SN ratio, the vibration of the machine with low rigidity is excited, and this effect is superimposed on the observed value of the motor torque as a torque disturbance, resulting in a decrease in the SN ratio.

Therefore, considering the low rigidity of the machine, it is desirable that the cutoff characteristics of LPF 35-37 be set low enough to remove torque disturbances caused by mechanical vibration. However, in this case, it is not realistic to set the cutoff characteristics of LPF 35-37 low enough, as it may remove even the bandwidth necessary for identification.

To accurately estimate the mechanical system parameters even for such machines with low rigidity, this example is equipped with a speed command generator 1. The speed command generator 1 generates a smooth speed command that does not excite vibrations in the machine based on the acceleration command generator 2.

The acceleration command generator 2 in this example has the ability to design the acceleration command so that the maximum and minimum values of the acceleration command and the zero point are connected by a combination of functions of first order (linear) or higher, and the speed command obtained by integrating them is the function allows the design of the acceleration command to produce a smooth one that does not contain the dominant frequency component that excites the machine.

The acceleration command generator 2 holds pre-designed acceleration commands and generates and outputs acceleration commands based on the pre-designed acceleration commands. The command may be designed arbitrarily by the user, or a pre-designed one may be selected for use.

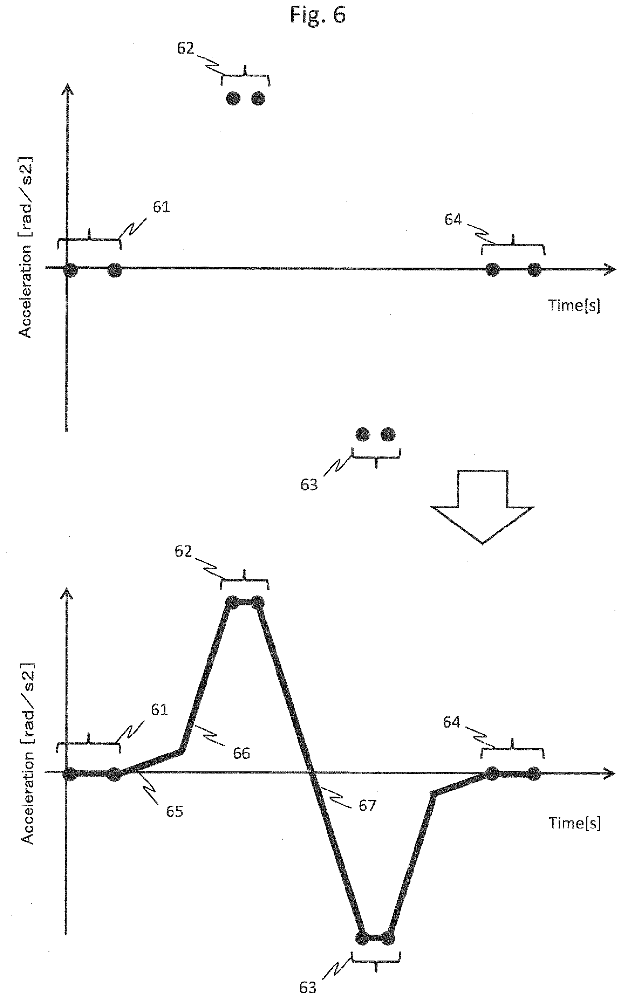

Fig. 6 shows a specific example of the relationship between the acceleration command (vertical axis) and time (horizontal axis) in the acceleration command generator 2 in this example. The upper part of Fig. 6 shows the zero point 61 and zero point 64, maximum point 62, and minimum point 63 of the acceleration command. The lower part of Fig. 6 shows the case where the zero points 61 and 64, the maximum point 62, and the minimum point 63 (but in this example, they are each a group of points) are connected by a linear function.

The zero point 61 and the maximum point 62 are connected by a linear function 65 and a linear function 66 with different slopes and lengths, as are the zero point 64 and the minimum point 63. The maximum point 62 and minimum point 63 are connected by a linear function 67. The zero point 61 and zero point 64, maximum point 62, and minimum point 63 are also cases where the points in the point group are connected by a linear function.

The zero point 61 and the maximum point 62 are composed of two linear functions with different slopes and lengths for smoothness and to shorten the travel distance (number of motor revolutions [rad]).

The speed command is the integral of the acceleration command, and the position command is the integral of the speed command. Therefore, if the acceleration command is smooth, the speed command is also smooth, and the smaller the area of the acceleration command, the shorter the travel distance.

Note that coulomb friction is assumed to be a constant value torque disturbance, i.e., a constant value torque disturbance with no position dependence. Since this assumption is considered to have a higher probability of being true the shorter the travel distance, shorter travel distances are desirable from the perspective of coulomb friction elimination. In addition, considering the limited operating range of the machine, it is desirable to be able to identify even a short travel distance from the viewpoint of physical usability.

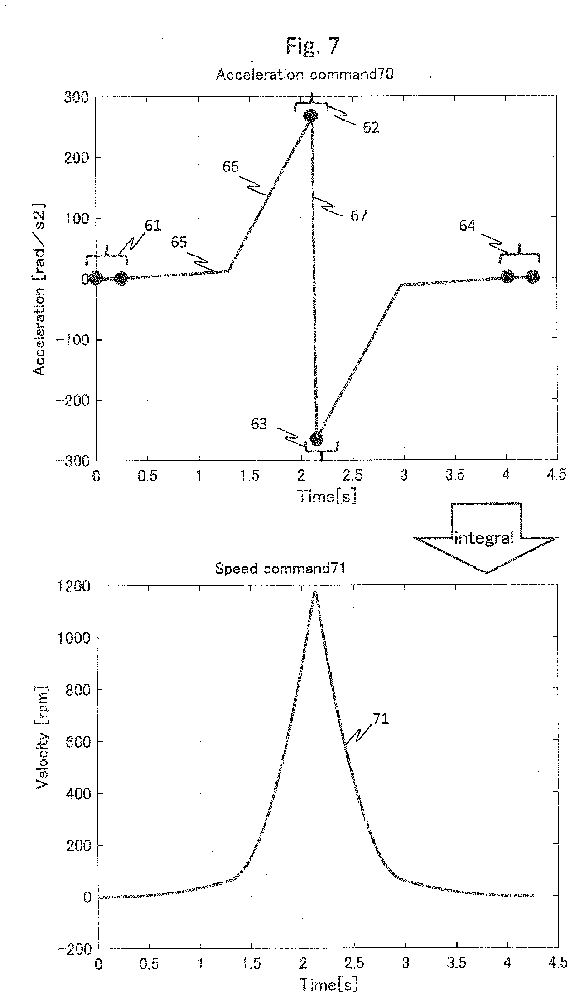

Fig. 7 is a numerical example of the design of the acceleration command in Fig. 6. The acceleration command 70 is designed as in Fig. 6, and speed command 71 is obtained by integrating acceleration command 70.

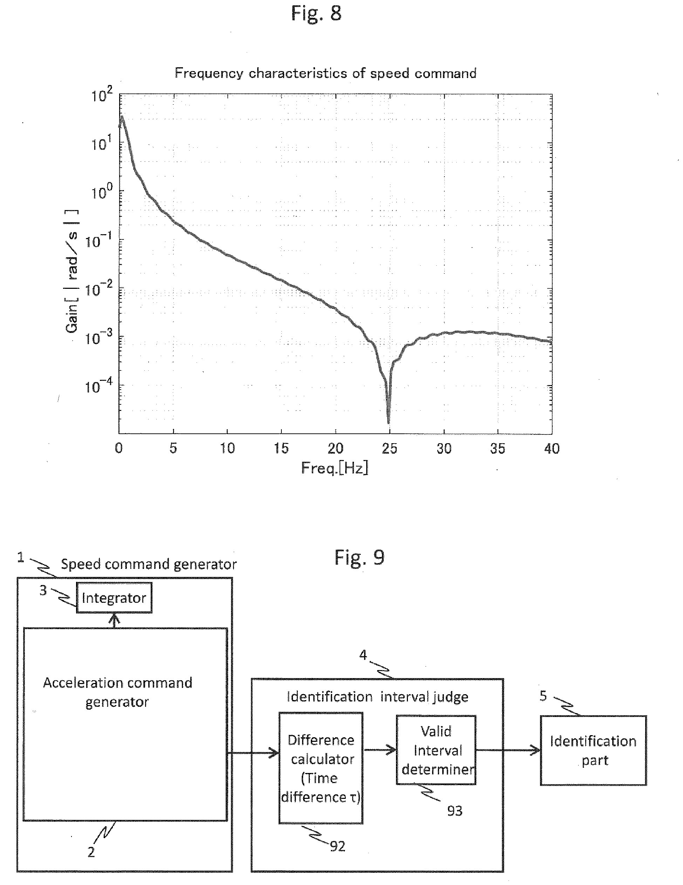

Fig. 8 shows the frequency characteristics (gain) of speed command 71 in Fig. 7. From Fig. 8, it can be seen that the speed command is a smooth speed command that does not have sufficient gain in the frequency band above about 2 [Hz] and does not contain dominant frequency components that excite the machine.

Fig. 9 illustrates identification interval judge 4. The identification interval judge 4 consists of difference calculator 92 and valid interval determiner 93 as shown in Fig. 9.

The difference calculator 92 is a linear difference filter with the same time difference $\tau$ (= n $\times$ TID) and the same filter gain A as the difference calculators 7 and 8. The identification part 5 is operated by determining the valid interval for identification based on the difference signal of the acceleration command calculated by the difference calculator 92.

One of the conditions under which the valid interval determiner 93 operates identification part 5 is with respect to the response delay of the difference calculator 92. The sequential identification part has a forgetting factor $\lambda$ and should be identified only after the initial state of the difference calculators 7 and 8 is no longer affected.

Since the time difference $\tau$ of the difference calculator 92 is set to the same value as the difference calculator 7 and 8 that process the signals used by the identification part 5, in order to perform significant identification, one of the conditions under which the valid interval determiner 93 operates the identification part 5 is integral the difference signal output by the difference calculator 92 is that the time difference $\tau$ elapses from the initial time. This is condition (A).

For example, in the speed command shown in Fig. 7, if the initial time is 0 second and the time difference $\tau$ is 1 second, the interval from 1 to 4 seconds is the interval where condition (A) is satisfied.

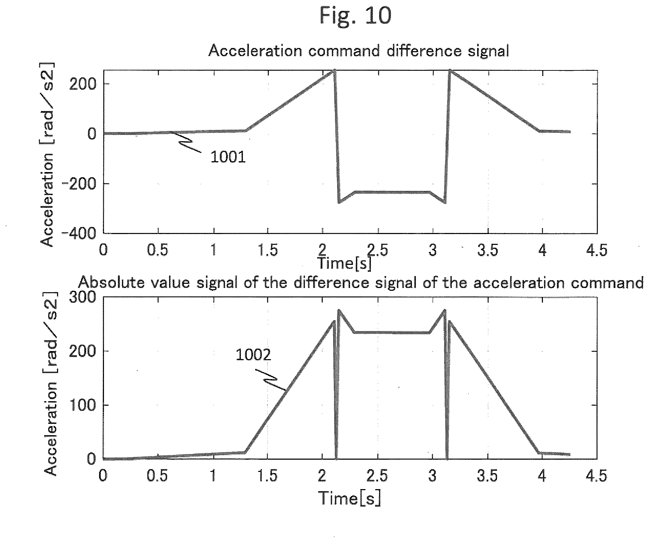

Fig. 10 shows the difference signal 1001 and its absolute value signal 1002 obtained by processing the acceleration command 70 in Fig. 7 with the difference calculator 92 with time difference $\tau$=1 second.

The signal used for identification should have a high signal gain from the viewpoint of SN ratio, and a higher gain of the difference signal is also expected to improve the identification accuracy in the mechanical system parameter sequential identification calculator based on the difference signal.

Thus, one of the conditions under which the valid interval determiner 93 operates the identification part 5 is the absolute value of the difference signal obtained by processing the acceleration command with the difference calculator 92 must be greater than or equal to the predetermined value AX, or the average value of the difference signal must be greater than or equal to the predetermined value AAX in the interval. This is condition (B).

If the difference signal of the acceleration command is zero for a continuous interval, the identification condition is theoretically undesirable.

The interval in which the difference signal of the acceleration command is zero is the interval in which the acceleration command is constant, but in this case, the mechanical characteristics related to acceleration are removed by the difference process.

Thus, one of the conditions under which the valid interval determiner 93 operates the identification part 5 is that the interval where the difference signal of the acceleration command is non-zero. This is condition (C).

Note that in the absolute value signal 1002 shown in Fig. 10, there is a timing when the positive and negative values of the difference signal of the acceleration command are reversed, but it is not a continuous interval where the difference signal of the acceleration command is zero.

The valid interval judge 93 operates the identification part 5 in the interval satisfying the conditions (A) to (C) based on the acceleration command generated by the acceleration command generator 2.

If the predetermined value AX is 100 in Fig. 10, the valid interval judge 93 determines that the interval of approximately 1.6 to 3.65 seconds is a valid interval for identification and operates the identification part 5.

The identification part 5 performs identification in this interval and completes the estimation of the mechanical parameters.

The auto-regulator 21 shown in Fig. 2 may use a single estimation result, or the average of multiple estimation results, as the final mechanical system parameters estimation result used to adjust the controller.

According to the motor control device in this example, even for a machine with low rigidity, it does not excite vibration of the machine, and the SN ratio of the signal used for identification is good, and identification can be achieved at a significant interval for identification.

As a result, it is possible to provide a motor control device that estimates mechanical system parameters with high accuracy without excitation of machine vibration, even for machines with low rigidity, and automatically adjusts the motor controller based on these estimated results. The motor control device that automatically adjusts the motor controller based on the results of this estimation can be provided to avoid machine damage and loss of usability caused by the excitation and generation of machine vibration.

Note that in the vicinity of zero speed, the effects of various nonlinear phenomena, such as coulomb friction, viscous friction, and the Stribeck effect in addition, are superimposed on the speed response to the motor torque. Therefore, it is undesirable to continue the sequential identification shown in equations (2) to (6), which assumes that the mechanical system is linear, in the interval that includes the timing when the speed becomes zero.

In particular, when the time difference $\tau$ of the difference calculator 92 is set to be long, the time including the interval in which the speed of the difference signal is zero in principle tends to increase, so the speed command and the time difference $\tau$, in other words, acceleration, which is the source of the speed command, it is necessary to operate the identification part 5 with an awareness of the relationship between the command and the time difference $\tau$.

Therefore, one of the conditions for the valid interval judge 93 to operate the identification part 5 is that the difference signal output by the difference calculator 92 must be from an interval that does not include the timing when the speed command is zero. This is condition (D). For this determination, the effective interval determiner 93 may be configured to refer to the speed command.

In this example, a total of three different linear functions were used in designing the acceleration command, but combinations of four or more may be used, and a function of the second order or more may be used.

Although the sequential identification part 6 employs a mechanical system parameter sequential identification calculator 33 with s(t), a(t), and T(t) as inputs, an identification part with s(t) and T(t) as inputs may also be employed.

Although identification part 5 uses a sequential type, a batch type identification part that operates non-sequentially may also be used.

[Example 2]

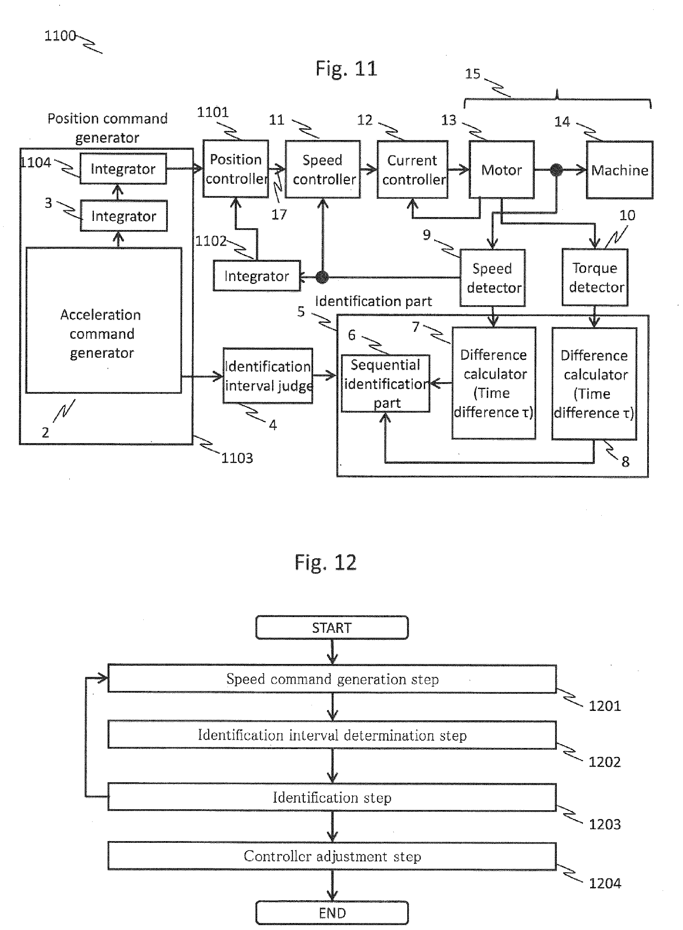

Fig. 11 shows Example 2. As shown in Fig. 11, this example is an example of a motor control device 1100 when the configuration of the command generation and control system is different in Example 1. Specifically, the configuration has a position command generator 1103, a position controller 1101, and a first integrator 1102 added. The position command generator 1103 consists of an acceleration command generator 2, a second integrator 3, and a third integrator 1104. The components given the same numbers as in Fig. 1 are assumed to have the same functions in Fig. 11.

The position command generator 1103 generates a position command. The position controller 1101 generates a speed command based on the position command and the observed motor rotation position obtained by integrating the observed value of the motor rotation angular velocity, so that the observed value of the motor rotation angular velocity follows the position command.

Even with this position control system, the machine operates based on the position command generated based on the speed command, which does not excite vibration of the machine designed based on the desired acceleration command. Therefore, the same level of estimation accuracy as in Example 1 is expected in this example.

As a result, it is possible to provide a motor control device that estimates mechanical system parameters with high accuracy without exciting machine vibration, even for machines with low rigidity, and automatically adjusts the motor controller based on these estimated results.

It is also possible to provide a motor control device that automatically adjusts the motor controller, which can avoid mechanical damage and loss of experiential usability caused by the excitation and generation of mechanical vibration.

In this example, auto-regulator 21 shown in Fig. 2 may be used to adjust the gain of the position controller as well as the speed controller.

[Example 3]

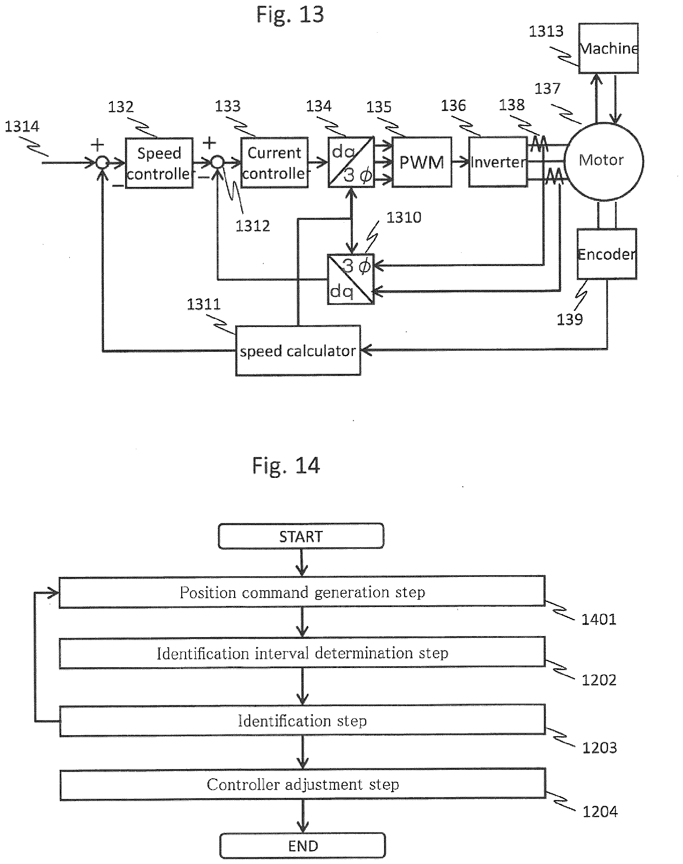

This example is for the speed control system of AC servo motors in the cascade configuration shown in Fig. 13. An example for automatically adjusting the speed control system of an AC servo motor will be described.

A permanent magnet synchronous motor 137 operating on 3-phase AC assembled in a low rigidity machine 1313 detects the rotational position of the motor with an encoder 139, calculates an observed value of the angular speed of motor rotation with a speed calculator 1311, and based on the speed command 1314 and the observed value of the angular speed of motor rotation, speed controller 132 calculates the current command.

The motor current of the permanent magnet synchronous motor 137 is detected by the current sensor 138 and converted into observed dq-axis current by the first coordinate converter (3-phase to dq-axis coordinate converter) 1310, the current controller 133 calculate dq-axis voltage command based on the current command and the observed dq-axis current.

The dq-axis voltage command is converted to a 3-phase voltage command by the second coordinate converter (dq-axis to 3-phase coordinate converter) 134, which is then converted to a voltage pulse command by the PWM (Pulse Width Modulation) device 135.

The inverter 136 supplies 3-phase voltage to the permanent magnet synchronous motor 137 based on the voltage pulse commands.

The speed controller 132, current controller 133, first coordinate converter 1310, second coordinate converter 134, PWM device 135 and speed calculator 1311 may be configured as software, and stored in a memory or other storage device and read by the processor and executed for implementing each function.

Fig. 12 shows the processing steps of the automatic adjustment process in Example 3. For the AC servo motor speed control system shown in Fig. 13, the steps of the automatic adjustment process in this example roughly consist of the speed command generation step 1201, the identification interval determination step 1202, the identification step 1203, and the controller adjustment step 1204, as shown in Fig. 12.

The speed command generation step 1201 includes an acceleration command generation step, in the acceleration command generation step generating acceleration command which is the maximum and minimum values of the command and the zero point are connected by a combination of functions of the first order (linear) or more. It is the speed command generation step 1201 to generate an acceleration command so that the speed command obtained by integrating the command is smooth and does not contain a dominant frequency component that excites the machine.

Specific examples of acceleration commands designed and generated in the acceleration command generation step is shown in Fig. 6 and Fig. 7.

In the identification interval determination step 1202, the identification interval for estimating the mechanical system parameters is determined based on the acceleration command generated in the acceleration command generation step.

The determination of whether the interval is significant for identification implementation is based on the fulfillment of conditions (A) through (C) shown in Example 1. Condition (D) shown in Example 1 may also be considered.

In the identification step 1203, the permanent magnet synchronous motor 137 and the low rigidity machine 1313 that are to be controlled are driven based on the speed command generated in the speed command generation step 1201.

From the observed value of the motor torque calculated from the current sensor 138 and the observed value of the motor rotational angular velocity calculated from the encoder 139, identification is performed in the interval judged to be significant for identification in the identification interval determination step 1202 and carry out estimation of mechanical parameters.

In this case, identification is performed using the sequential identification method after preprocessing the observed values of motor torque and motor rotation angular velocity using a linear difference filter with a time difference of $\tau$. Formulas (2) to (6) can be used as the sequential identification method when acceleration is calculated explicitly. The linear difference filter can be found in formula (1).

As shown in Fig. 12, the speed command generation step 1201 to identification step 1203 may be repeated a predetermined number of times.

The controller adjustment step 1204 performs an automatic adjustment of the control gain of the speed controller 132 to achieve the user desired responsiveness, based on the (multiple) estimates of the mechanical system parameters obtained in the identification step 1203.

As a result, even a machine with low rigidity can estimate the mechanical system parameters with high accuracy without exciting vibration of the machine, and based on this estimation result, the motor control device shown in Fig. 13 can be automatically adjusted for automatic adjustment.

It is also possible to automatically adjust the motor control device to avoid mechanical damage and loss of experiential usability caused by the excitation and generation of mechanical vibration.

Fig. 14 shows the processing steps of the automatic adjustment process when the motor control device constitutes the position control system. Even when the motor control device constitutes the position control system, it is possible to automatically adjust the motor control device that constitutes the position control system by generating position commands in the position command generation step 1401, as shown in Fig. 14.

Specifically, the position command generation step 1401 generates a position command by integrating the speed command generated in the speed command generation step 1201.

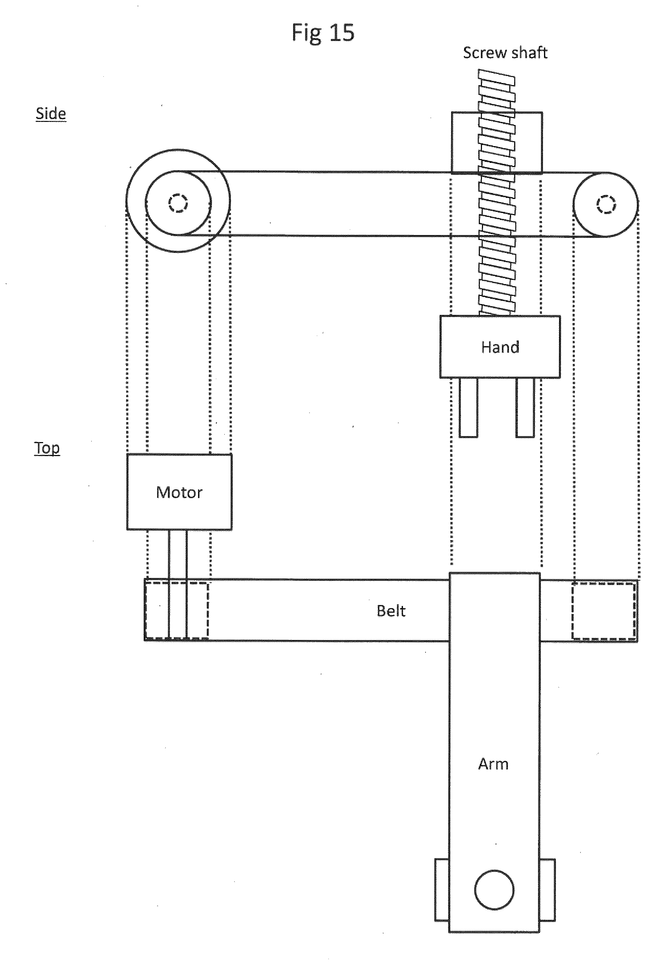

The low rigidity machine 1313 is, for example, a take-out machine that takes out machine parts from a machine tool, as shown in Fig. 15. The upper part of Fig. 15 shows a side view of the ejector machine, and the lower part of Fig. 15 shows a top view of the ejector machine.

The automatic adjustment of the motor control device in this example is effective for machines whose mechanical properties do not change significantly as the machine moves.

Even if the mechanical characteristics change as the machine moves, by identifying the moving interval segmentally, it is possible to estimate the mechanical system parameters, which are segmental mechanical characteristics, even for a machine with low rigidity. The controller adjustment step 1204 may be equipped with an auto-regulator that automatically adjusts the control gain of the controller appropriately based on the estimation results of the segmental mechanical system parameters.

REFERENCE SIGNS LIST

| | |
|---|---|
| 1 | speed command generator |
| 2 | acceleration command generator |
| 4 | identification interval judge |
| 5 | identification part |
| 6 | sequential identification part |
| 7, 8 | difference calculator |
| 11 | speed controller |
| 21 | auto-regulator |

**Claims**

1. A motor control device that controls a machine comprising:

   an identification part estimating moment of inertia and viscous friction,
   a speed command generation part generating a speed command by integrating an acceleration command,
   a difference signal calculation part calculating a difference signal from the acceleration command with time difference, and
   an identification interval judgment part determining a valid interval to operate the identification part based on the difference signal, operating the identification part in the valid interval and driving the motor based on the speed command generated by the speed command generating part,
   wherein the identification part estimates the moment of inertia and the viscous friction.

2. A motor control device according to claim 1,
   the identification part comprising

   wherein a second difference signal calculation part calculating a second difference signal with a time difference for observed value of the torque of the motor and a time difference for the observed value of the angular velocity of rotation of the motor, and
   the identification part estimates the moment of inertia and the viscous friction based on the difference signal.

3. A motor control device according to claim 2,
   wherein the difference signal calculation part or the second difference signal calculation part are linear difference filter with time difference as a parameter, wherein the time difference is set based on the acceleration command and its frequency characteristics.

4. A motor control device according to claim 1,
   wherein the identification interval judgment part operates the identification part with valid interval where the difference signal of the acceleration command is nonzero.

5. A motor control device according to claim 1,
wherein the identification interval judgment part operates the identification part in the valid interval when the absolute value of the difference signal of the acceleration command or the time average of the absolute value of the difference signal of the acceleration command is greater than or equal to a predetermined value.

6. A motor control device according to claim 1,
wherein the speed command generation part generates a speed command that is obtained by integrating the acceleration command, the acceleration command's maximum value, minimum value and zero point are connected by a combination of functions of one or more order, and that does not contain a dominant frequency component that excites the machine.

7. A motor control device according to claim 1, further comprising:

a speed control unit, and
an automatic adjusting part adjusts the control gain of the speed control interval based on the estimated moment of inertia and viscous friction obtained by the identification part.

8. A motor control device according to claim 1, further comprising:
a position command generating part generating position command by integrating the speed command generated by the speed command generation part and controlling position of the machine to follow the position command.

9. An automatic adjustment method for motor control device that controls a machine comprising:

a speed command generating step for generating a speed command by integrating the acceleration command,
a motor driving step for driving the motor based on the speed command,
a difference signal calculation step for calculating the difference signal from the acceleration command with time difference,
an identification step for estimating the moment of inertia and viscous friction,
an identification interval determination step for determining valid interval based on the difference signal and operate the identification step in the valid interval, and
an automatic adjustment step for adjusting the control gain based on the estimated value of the moment of inertia and the viscous friction.

10. An automatic adjustment method according to claim 9 ,

the identification step comprising
a second difference signal calculation step for calculating a second difference signal with a time difference for observed value of the torque of the motor and the observed value of the angular velocity of rotation of the motor and, estimating the moment of inertia and viscous friction based on the second difference signal.

11. An automatic adjustment method according to claim 10,

the difference signal calculation step or the second difference signal calculation step
performs a linear differencing process with time difference as a parameter,
the time difference is set based on the acceleration command and its frequency characteristics.

12. An automatic adjustment method according to claim 9, the identification interval determination step
operates the identification step in a valid interval when the interval in which the difference signal is nonzero.

13. An automatic adjustment method according to claim 9, the identification interval determination step
operate the identification step in a valid interval when the interval where the absolute value of the difference signal of the acceleration command or the time average of the absolute value of the difference signal of the acceleration command is greater than a predetermined value.

14. An automatic adjustment method according to claim 9, the speed command generation step generates a speed command that is obtained by integrating the acceleration command, whose maximum value, the minimum value, and the zero point are connected by a combination of functions of one or more orders, and that does not contain a dominant frequency component that excites the machine.

Fig. 1

Fig. 2

## Fig. 3

## Fig. 4

$$A\left[x(t) - x(t - nT_{ID})\right]$$

Fig. 5

Frequency response

## Fig. 6

## Fig. 7

Acceleration command70

Speed command71

Fig. 8

**Frequency characteristics of speed command**

Fig. 9

# Fig. 10

Acceleration command difference signal

Absolute value signal of the difference signal of the acceleration command

1100

## Fig. 11

## Fig. 12

## Fig. 13

## Fig. 14

# Fig 15

Screw shaft

Side

Top

Hand

Motor

Belt

Arm

<div align="center">

**INTERNATIONAL SEARCH REPORT**

</div>

| International application No. |
| --- |
| **PCT/JP2023/000709** |

**A.    CLASSIFICATION OF SUBJECT MATTER**

*H02P 29/00*(2016.01)i; *G05B 11/36*(2006.01)i; *H02P 21/16*(2016.01)i
FI:    H02P29/00; G05B11/36 B; H02P21/16

According to International Patent Classification (IPC) or to both national classification and IPC

**B.    FIELDS SEARCHED**

Minimum documentation searched (classification system followed by classification symbols)

H02P29/00; G05B11/36; H02P21/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2007-60767 A (YASKAWA ELECTRIC CORP.) 08 March 2007 (2007-03-08) paragraphs [0019]-[0031], fig. 1-9 | 1-14 |
| A | WO 2017/213182 A1 (MITSUBISHI ELECTRIC CORP.) 14 December 2017 (2017-12-14) paragraphs [0011]-[0088], fig. 1-22 | 1-14 |

☐ Further documents are listed in the continuation of Box C.        ☑ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **14 February 2023** | **07 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/000709**

| Patent document cited in search report | | | Publication date (day/month/year) | Patent family member(s) | Publication date (day/month/year) |
|---|---|---|---|---|---|
| JP | 2007-60767 | A | 08 March 2007 | (Family: none) | |
| WO | 2017/213182 | A1 | 14 December 2017 | US 2019/0137966 A1 paragraphs [0034]-[0112], fig. 1-22 CN 109219924 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006217729 A